# EUROPEAN PATENT APPLICATION

(11) **EP 4 372 569 A1**
(43) Date of publication of application: **22.05.2024**
(21) Application number: 23207936.8
(22) Date of filing: 06.11.2023
(51) Int. Cl.: G06F 12/14, G06F 3/06, H04L 9/40

(54) **STORAGE SYSTEM SUPPORTING OFFLOADING FUNCTION AND OPERATING METHOD THEREOF**

(30) Priority: 15.11.2022 KR 20220152738
(71) Applicant: Samsung Electronics Co., Ltd., Suwon-si, Gyeonggi-do 16677 (KR)
(72) Inventor: EUN, Heeseok, 16677 Suwon-si, Gyeonggi-do (KR); MOON, Dongouk, 16677 Suwon-si, Gyeonggi-do (KR); LEE, Seunghan, 16677 Suwon-si, Gyeonggi-do (KR); JI, Sooyoung, 16677 Suwon-si, Gyeonggi-do (KR)
(74) Representative: Kuhnen & Wacker Patent- und Rechtsanwaltsbüro PartG mbB

(57) **Abstract**

A storage system is provided. The system includes: a network interface device configured to communicate with a host and including a first computing circuit configured to support first offloading functions and first algorithms corresponding thereto; a computing storage device configured to store data and including a second computing circuit configured to support second offloading functions and second algorithms corresponding thereto; and a system controller configured to perform a management operation to control an offloading computing operation to be performed by one of the first computing circuit and the second computing circuit according to an offloading request of the host, based on offload capability information about the first offloading functions, the second offloading functions, the first algorithms, and the second algorithms.

## Description

### CROSS-REFERENCE TO RELATED APPLICATION

This application is based on and claims priority under 35 U.S.C. §119 to Korean Patent Application No. 10-2022-0152738, filed on November 15, 2022, in the Korean Intellectual Property Office, the disclosure of which is incorporated by reference herein in its entirety.

### BACKGROUND

The present disclosure relates to a storage system, and more particularly, to a storage system and an operating method thereof, which support an offloading function.

Electronic devices perform unique functions based on operations of electronic circuits included therein. An electronic device may perform a unique function while operating individually. An electronic device may perform a unique function while communicating with a different electronic device.

A storage device is an example of an electronic device. A storage device may store and output data based on operations of elements included therein and may thus provide a storage service. An electronic device may manage data individually, or may manage data while communicating with a different electronic device.

A host may communicate with an electronic device to provide a service. A plurality of storage devices may be implemented as a storage system, and a host may transmit data to a storage system.

Offloading technology may be used to improve an operation speed and reduce limitations due to a limited resource of a host. A host may transfer some of computing operations, needed for application execution, to a storage system, and the storage system may perform the computing operations and may return a performance result to the host.

Furthermore, the host may select an offloading function and an algorithm suitable for the offloading function and may request the selected algorithm from the storage system, and the storage system may include a plurality of devices for performing an offloading computing operation in response to an offloading request of the host.

### SUMMARY

One or more example embodiments provide a storage system, which performs a management operation so that an offloading operation is efficiently performed in a storage system including devices for a plurality of offloading functions and a plurality of algorithms, and an operating method of the storage system.

According to an aspect of an example embodiment, a storage system includes: a network interface device configured to communicate with a host and including a first computing circuit configured to support first offloading functions and first algorithms corresponding thereto; a computing storage device configured to store data and including a second computing circuit configured to support second offloading functions and second algorithms corresponding thereto; and a system controller configured to perform a management operation to control an offloading computing operation to be performed by one of the first computing circuit and the second computing circuit according to an offloading request of the host, based on offload capability information about the first offloading functions, the second offloading functions, the first algorithms, and the second algorithms.

According to another aspect of an example embodiment, a storage system includes: a network interface device configured to communicate with a host and including a first computing circuit configured to support an encryption offloading function and first encryption algorithms corresponding thereto; a first computing storage device configured to provide a first memory space to the host and including a second computing circuit configured to support the encryption offloading function and second encryption algorithms corresponding thereto; a second computing storage device configured to provide a second memory space to the host and including a third computing circuit configured to support the encryption offloading function and third encryption algorithms corresponding thereto; and a system controller configured to perform a management operation to control an encryption operation to be performed by any one or any combination of the first to third computing circuits according to an encryption offloading request of the host, based on offload capability information about the first to third encryption algorithms.

According to another aspect of an example embodiment, a storage system includes: a network interface device configured to communicate with a host and including a first computing circuit configured to support an encryption offloading function and first encryption algorithms corresponding thereto; a computing storage device configured to provide a memory space to the host and including a second computing circuit configured to support a machine learning offloading function, the encryption offloading function, and second encryption algorithms corresponding to the encryption offloading function; and a system controller configured to perform a management operation to control the machine learning offloading function to be activated by the host, an encryption algorithm suitable for the machine learning offloading function to be identified based on offload capability information about the first and second encryption algorithms, and an encryption operation to be performed by any one or any combination of the first and second computing circuits, based on a search result, in response to an encryption offloading request of the host.

According to another aspect of an example embodiment, a computer storage device includes: a memory device; a computing circuit configured to support an encryption offloading function and encryption algorithms corresponding thereto; and a controller configured to control the memory device and the computing circuit. The computing circuit is configured to selectively perform an encryption operation on data received from the outside using one of the encryption algorithms, based on a flag which indicates whether encryption has been performed.

### BRIEF DESCRIPTION OF DRAWINGS

The above and other aspects and features will be more apparent from the following description of example embodiments, taken in conjunction with the accompanying drawings, in which:
FIG. 1 is a block diagram schematically illustrating an electronic system according to an example embodiment;
FIG. 2 is a flowchart for describing an operating method of a storage system, according to an example embodiment;
FIGS. 3A and 3B are flowcharts for describing detailed aspects of operation S 150 of FIG. 2, according to example embodiments;
FIG. 4 is a table diagram for describing offloading functions according to an example embodiment;
FIG. 5 is a block diagram illustrating a storage system according to an example embodiment;
FIG. 6A is a table diagram for describing encryption algorithms supported by devices included in a storage system, according to an example embodiment, and FIG. 6B is a diagram for describing a list provided through a user interface, according to an example embodiment;
FIGS. 7 to 10 are flowcharts for describing an operating method of a storage system, according to example embodiments;
FIG. 11 is a diagram for describing a domain supporting an offloading function, according to an example embodiment;
FIG. 12 is a flowchart for describing an operating method of a storage system, according to an example embodiment;
FIG. 13A is a table diagram for describing encryption algorithms supported by devices included in a storage system, according to an example embodiment, and FIG. 13B is a diagram for describing a list provided through a user interface, according to an example embodiment;
FIGS. 14 to 16 are flowcharts for describing an operating method of a storage system, according to example embodiments;
FIG. 17 is a block diagram illustrating an electronic system according to an example embodiment; and
FIG. 18 is a block diagram illustrating a database system according to an example embodiment.

### DETAILED DESCRIPTION

Example embodiments will be described more fully hereinafter with reference to the accompanying drawings. Expressions such as "at least one of," when preceding a list of elements, modify the entire list of elements and do not modify the individual elements of the list. For example, the expression, "at least one of a, b, and c," should be understood as including only a, only b, only c, both a and b, both a and c, both b and c, or all of a, b, and c.

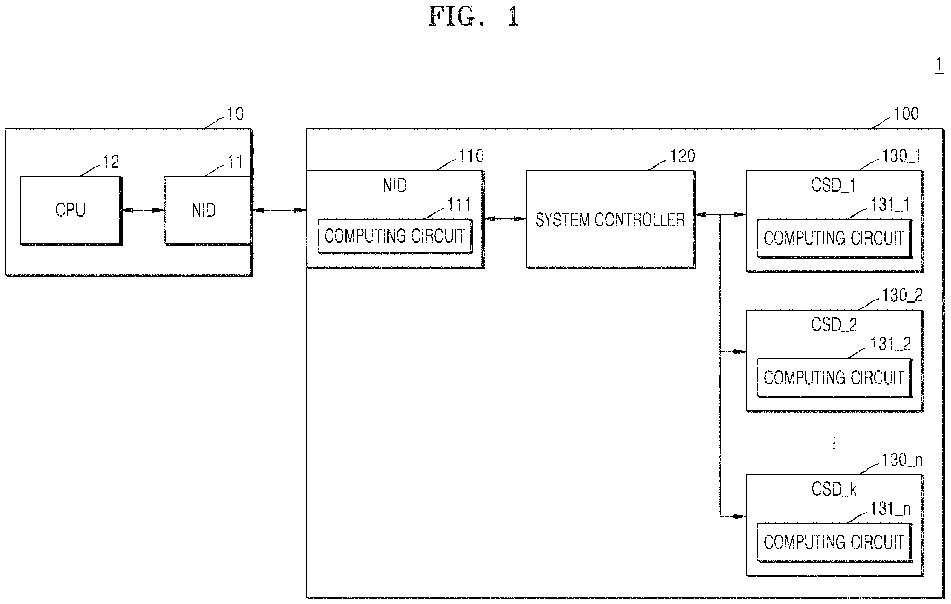

FIG. 1 is a block diagram schematically illustrating an electronic system 1 according to an example embodiment. The electronic system 1 may be one of electronic devices such as a desktop computer, a laptop computer, a tablet computer, a smartphone, a wearable device, a video game machine, a workstation, one or more servers, an electrical vehicle, a home appliance, and a medical device. In an example embodiment, the electronic system 1, which is implemented as a server system and has a disaggregated architecture, is mainly described. However, this is only an example, and example embodiments are not limited thereto, and the electronic system 1 may be variously implemented.

Referring to FIG. 1, the electronic system 1 may include a computing system 10 and a storage system 100. The computing system 10 may include a network interface device 11 and a central processing unit (CPU) 12, and the storage system 100 may include a network interface device 110, a system controller 120, and first to nth computing storage devices 130_1 to 130_n. The computing system 10 according to an example embodiment may be referred to as a computing node, and the storage system 100 may be referred to as a storage node. Also, the electronic system 1 may include more computing systems and more storage systems.

In response to a request from a host including a plurality of containers (or a plurality of virtual machines) corresponding to a plurality of users using the electronic system 1, the computing system 10 may perform a computing (or processing) operation based on the request. For example, the computing system 10 may execute a program selected by the host and may perform a computing operation on data received from the host. The computing system 10 may store data, obtained through computing and processing, to the storage system 100. Also, for example, the computing system 10 may execute a program selected by the host and may perform a computing operation on data read from the storage system 100.

Based on a configuration of the electronic system 1, the host may directly communicate with the storage system 100, or may communicate with the storage system 100 through the computing system 10. Herein, the electronic system 1 and the host are described as separate elements, but example embodiments are not limited thereto and the host may be implemented in the computing system 10. Operations, such as selection of an offloading function and selection of an algorithm, which will be described below, as well as transmission of an offloading request suitable therefor, may be performed in the computing system 10. Accordingly, an operation of the host may be construed as an operation of the computing system 10.

The computing system 10 and the storage system 100 may communicate through the network interface devices 11 and 110. A network interface device may be referred to as a network interface card. The network interface devices 11 and 110 may operate based on a predetermined communication protocol and may provide an interface so that communication between the computing system 10 and the storage system 100 is smoothly performed. In detail, the network interface devices 11 and 110 may convert data which is to be transmitted, based on the predetermined communication protocol, and may restore data received thereby, based on the predetermined communication protocol. However, this is only an example, and example embodiments are not limited thereto, and the network interface devices 11 and 110 may perform more operations for communication between the computing system 10 and the storage system 100.

In an example embodiment, in the storage system 100, the network interface device 110 may include a computing circuit 111, and the first to nth computing storage devices 130_1 to 130_n may respectively include computing circuits 131_1 to 131_n. The computing circuits 111 and 131_1 to 131_n may perform an offloading computing operation based on a request of the host, so as to decrease a load of the CPU 12 of the computing system 10. Each of the computing circuits 111 and 131_1 to 131_n may be implemented as a field programmable gate array (FPGA) or an application specific integrated circuit (ASIC). In some example embodiments, each of the computing circuits 111 and 131_1 to 131_n may be implemented as software and may be executed by a processor or a CPU included in the storage system 100.

In an example embodiment, each of the computing circuits 111 and 131_1 to 131_n may support offloading functions and algorithms corresponding thereto. In this regard, the network interface device 110 and each of the first to nth computing storage devices 130_1 to 130_n may support offloading functions and algorithms corresponding thereto. Herein, an operation of each of the computing circuits 111 and 131_1 to 131_n may be referred to as an operation of each of the network interface device 110 and the first to nth computing storage devices 130_1 to 130_n.

For example, the computing circuit 111 may support a first offloading function and a first algorithm corresponding thereto, and the computing circuit 131_1 may support a second offloading function and a second algorithm corresponding thereto. Offloading functions and algorithms corresponding thereto, supported by some of the computing circuits 111 and 131_1 to 131_n, may be repetitive. The system controller 120 may perform a management operation so as to prevent repetitive offloading computing operations of the computing circuits 111 and 131_1 to 131_n by using repetitive offloading functions and algorithms corresponding thereto.

In an example embodiment, in response to an offloading request of the host, the system controller 120 may perform a management operation so that an offloading computing operation is performed by one of the computing circuits 111 and 131_1 to 131_n on the basis of offloading information about offloading functions and algorithms corresponding thereto, supported by the computing circuits 111 and 131_1 to 131_n. In an example embodiment, the system controller 120 may receive an offloading request of the host through the network interface device 110.

In an example embodiment, in an initialization operation of the storage system 100, the system controller 120 may collect information about offloading functions and algorithms supported by each of the network interface device 110 and the first to nth computing storage devices 130_1 to 130_n to generate offloading information.

In an example embodiment, the system controller 120 may generate a list representing offloading functions and algorithms supported by the storage system 100, based on the offloading information, and may transmit the generated list to the host through the network interface device 110. The host may select an offloading function and an algorithm, based on the list provided from the system controller 120, and may transmit an offloading request to the storage system 100.

In an example embodiment, the offloading request of the host may be suitable for the offloading function and algorithm each selected by the host. In an example embodiment, the system controller 120 may search for a device supporting an offloading function and an algorithm each selected by the host among the network interface device 110 and the first to nth computing storage devices 130_1 to 130_n, based on the offloading information, and may perform a management operation based on a search result. Herein, a management operation may include an operation of generating at least one of flags indicating whether the performance of certain operations is needed based on an offloading computing operation and a flag indicating whether the offloading computing operation has been performed in a different device, and transmitting the generated flags to at least one of devices connected with the system controller 120.

Hereinafter, an example embodiment is described where, in terms of an arrangement structure of the network interface device 110, in a case where an offloading function and an algorithm each selected by the host are supported by the network interface device 110, the network interface device 110 preferentially performs an offloading computing operation responding to a request from the host. However, this is only an example, and example embodiments are not limited thereto. In this case, based on control by the system controller 120, an offloading computing operation may not be performed in the network interface device 110. A detailed example embodiment thereof is described below.

For example, in a case where a first offloading function and a first algorithm each selected by the host are supported by the network interface device 110 and the first computing storage device 130_1, the network interface device 110 may first perform an offloading computing operation suitable for the first offloading function and the first algorithm, and the system controller 120 may transmit, to the first computing storage device 130_1, a flag indicating that the offloading computing operation has been performed in the network interface device 110.

As another example, in a case where a second offloading function and a second algorithm each selected by the host are supported by the first and second computing storage devices 130_1 and 130_2, the system controller 120 may select one computing storage device from among the first and second computing storage devices 130_1 and 130_2, and may transmit a flag indicating that an offloading computing operation has not been performed, to the selected device so that the offloading computing operation is performed by the selected device.

In an example embodiment, each of the first to nth computing storage devices 130_1 to 130_n may further include non-volatile memory devices having a large capacity and a volatile memory device used for an offloading computing operation. For example, the non-volatile memory devices may include phase-change random access memory (RAM) (PRAM), magneto-resistive RAM (MRAM), resistive RAM (ReRAM), ferro-electric RAM (FRAM), and flash memory. For example, the volatile memory device may include a memory, such as static RAM (SRAM), dynamic RAM (DRAM), and synchronous DRAM (SDRAM). In some example embodiments, each of the first to nth computing storage devices 130_1 to 130_n may be implemented as a solid state drive (SSD).

The system controller 120 of the storage system 100 according to an example embodiment may perform a management operation, based on offloading information about offloading functions supported by the network interface device 110 and the first to nth computing storage devices 130_1 to 130_n and algorithms corresponding thereto, and thus may prevent duplicate offloading computing operations from being performed in the network interface device 110 and the first to nth computing storage devices 130_1 to 130_n. As a result, the storage system 100 may perform the efficient use of resources and an efficient offloading operation to improve the total performance of the electronic system 1.

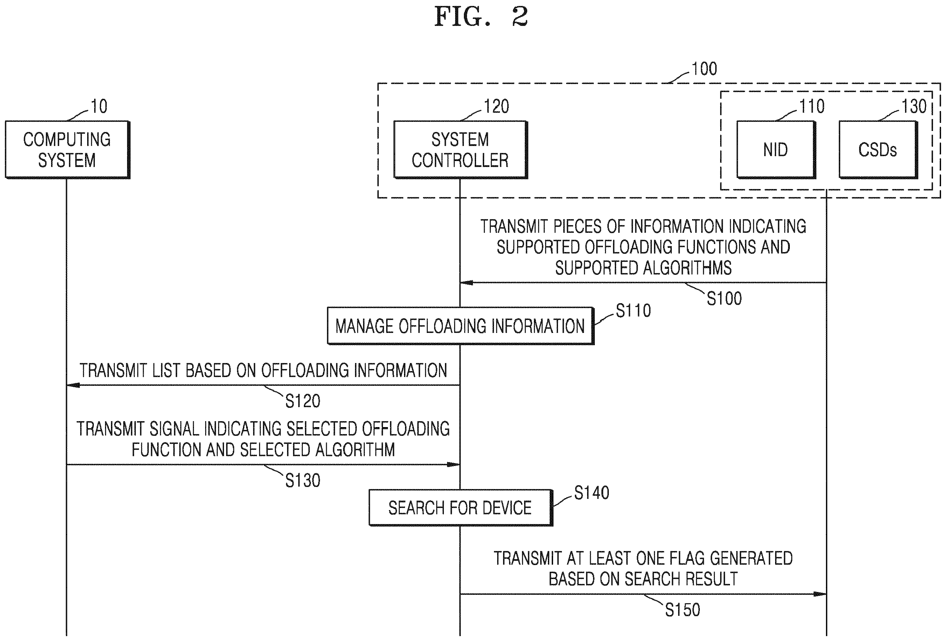

FIG. 2 is a flowchart for describing an operating method of a storage system 100, according to an example embodiment. The storage system 100 may include a network interface device 110, a system controller 120, and computing storage devices 130. For convenience of description, it is illustrated that the system controller 120 directly transmits or receives a signal to or from the computing system 10, but the system controller 120 may transmit or receive the signal to or from the computing system 10 through the network interface device 110. In an example embodiment, the computing system 10 of FIG. 2 may be replaced with or include a host.

Referring to FIG. 2, in operation S100, devices including the network interface device 110 and the computing storage devices 130 may transmit, to the system controller 120, information indicating offloading functions and algorithms supported thereby. In an example embodiment, the system controller 120 may request the information from the devices 110 and 130 in an initialization operation, and the devices 110 and 130 may transmit the information in response to the request. In an example embodiment, the storage system 100 may further include a newly connected device, and the system controller 120 may additionally receive information, indicating offloading functions and algorithms supported by the newly connected device, from the newly connected device. For example, the system controller 120 may transmit a request to the newly connected device for information indicating offloading functions and algorithms supported thereby when the device is connected, and the newly connected device may transmit the information in response to the request.

In operation S110, the system controller 120 may manage, as offloading information, the information which are received in operation S100.

In operation S110, the system controller 120 may transmit a list based on the offloading information to the computing system 10. The list may indicate offloading functions and algorithms supported by the storage system 100. In an example embodiment, the computing system 10 may provide the list to a host (or a user) through a user interface. The host may select a desired offloading function from among offloading functions of the list and may select a desired algorithm from among algorithms corresponding to the selected offloading function.

In operation S130, the computing system 10 may transmit a signal, indicating the offloading function and the algorithm each selected by the host, to the system controller 120.

In operation S140, the system controller 120 may search for a device which supports the offloading function and the algorithm each selected by the host, based on the offloading information and the signal which are received in operation S130.

In operation S150, the system controller 120 may transmit at least one flag, generated based on a search result which is obtained in operation S140, to at least one of the devices 110 and 130. For example, the flag may indicate whether an offloading computing operation has been performed in a different device, so as to prevent duplicate offloading computing operations from being performed in the devices 110 and 130. For example, the flag may further indicate an offloading function and an algorithm each selected by the host. For example, the flag may further indicate whether the performance of a certain operation is not needed in performing a certain offloading computing operation.

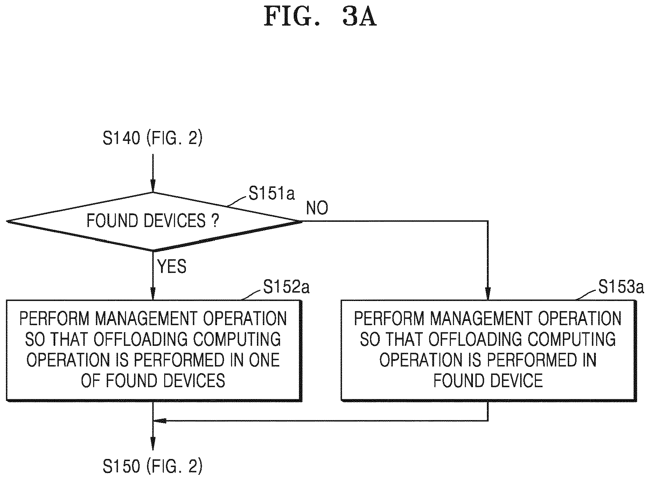

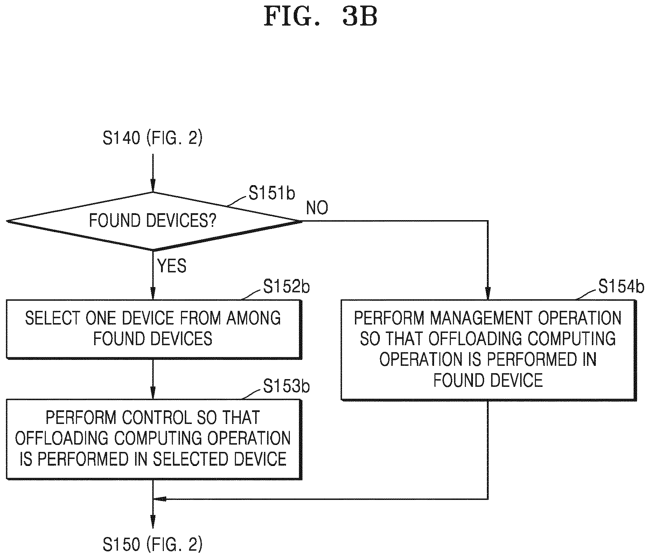

FIGS. 3A and 3B are flowcharts for describing detailed examples of operation S150 of FIG. 2, according to example embodiments. FIGS. 3A and 3B are described below with reference to FIG. 2.

Referring to FIG. 3A, in operation S151a subsequent to operation S140 of FIG. 2, the system controller 120 may determine whether a plurality of devices are found.

When "YES" is determined in operation S151a, in operation S152a, the system controller 120 may perform a management operation so that an offloading computing operation is performed in one of the found plurality of devices. In detail, when one of the found devices performs the offloading computing operation, the system controller 120 may generate a flag indicating that the offloading computing operation has been performed.

When "NO" is determined in operation S151a (i.e., when a single device is found), in operation S153a, the system controller 120 may perform a management operation so that the offloading computing operation is performed in the found device. In detail, the system controller 120 may generate a flag indicating that the offloading computing operation has not been performed.

Subsequently, operation S150 of FIG. 2 may be performed.

Referring further to FIG. 3B, in operation S151b subsequent to operation S140 of FIG. 2, the system controller 120 may determine whether a plurality of devices are found.

When "YES" is determined in operation S151b, in operation S152b, the system controller 120 may select one device from among the found plurality of devices. In detail, when the found plurality of devices include the network interface device 110 and a computing storage device, the system controller 120 may select the network interface device 110, or may select the computing storage device.

In operation S153b, the system controller 120 may perform control so that an offloading computing operation is performed in the selected device. Also, the system controller 120 may generate a flag so that the offloading computing operation is performed in only the selected device.

When "NO" is determined in operation S151b, in operation S154b, the system controller 120 may perform a management operation so that the offloading computing operation is performed in the found device.

Subsequently, operation S150 of FIG. 2 may be performed.

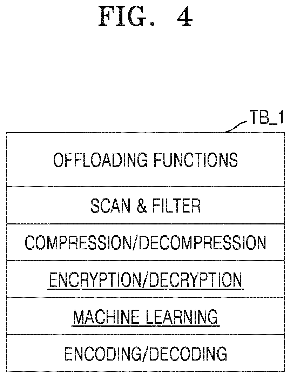

FIG. 4 is a table diagram for describing offloading functions according to an example embodiment.

Referring to a first table TB_1 of FIG. 4, the offloading functions may include at least one of a scan & filter offloading function, a compression/decompression offloading function, an encryption/decryption offloading function, a machine learning offloading function, and an encoding/decoding offloading function.

The devices 110 and 130 of FIG. 2 may support at least one of the offloading functions of the first table TB_1. Also, algorithms respectively corresponding to the offloading functions may be provided, and each of the devices 110 and 130 of FIG. 2 may support at least one of algorithms corresponding to an offloading function supported thereby.

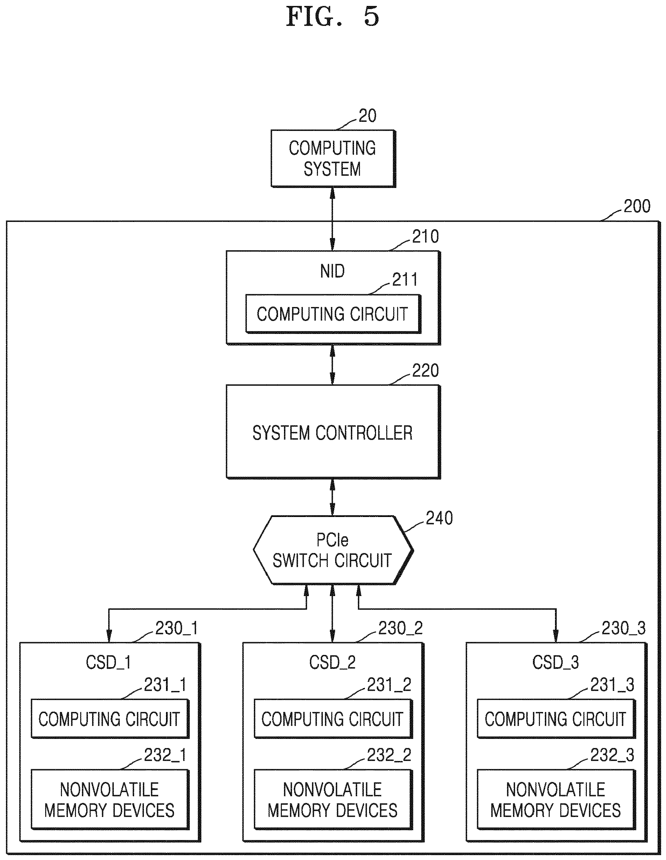

FIGS. 5 to 10 illustrate example embodiments where it is assumed that an encryption offloading function is selected by the host and is activated in the storage system 100 of FIG. 2, and an encryption operation is performed as an offloading computing operation.

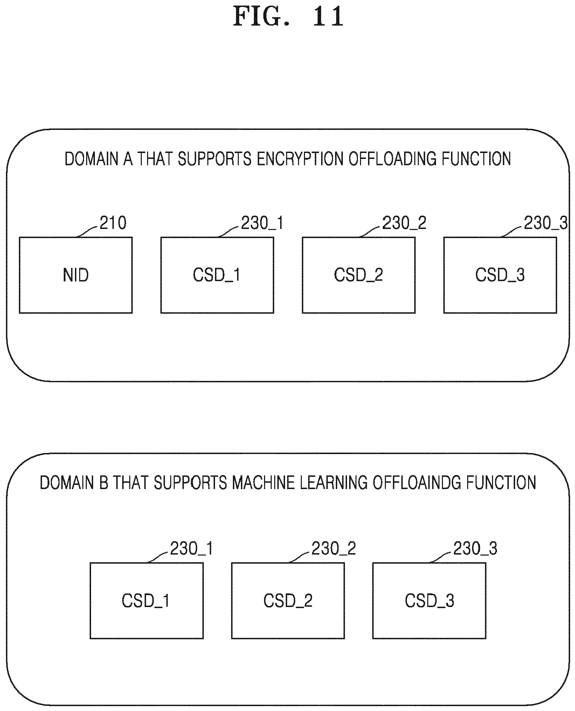

FIGS. 11 to 16 illustrate example embodiments where it is assumed that an encryption offloading function and a machine learning offloading function are selected by the host and are activated in the storage system 100 of FIG. 2, and each of an encryption operation and a machine learning operation is performed as an offloading computing operation.

FIG. 5 is a block diagram illustrating a storage system 200 according to an example embodiment.

Referring to FIG. 5, the storage system 200 may include a network interface device 210, a system controller 220, a peripheral component interconnect express (PCIe) switch circuit 240, and first to third computing storage devices 230_1 to 230_3.

The network interface device 210 may include a first computing circuit 211 which supports an encryption offloading function and first encryption algorithms corresponding thereto. The first computing storage device 230_1 may include a second computing circuit 231_1 which supports an encryption offloading function and second encryption algorithms corresponding thereto. The second computing storage device 2302 may include a third computing circuit 232_2 which supports an encryption offloading function and third encryption algorithms corresponding thereto. The third computing storage device 230_3 may include a fourth computing circuit 231_3 which supports an encryption offloading function and fourth encryption algorithms corresponding thereto. Also, the first to third computing storage devices 230_1 to 230_3 may respectively include non-volatile memory devices 232_1 to 232_3.

In an example embodiment, the system controller 220 may be connected with the first to third computing storage devices 230_1 to 230_3 through the PCIe switch circuit 240. The system controller 220 may control all operations of the first to third computing storage devices 230_1 to 230_3.

In an example embodiment, the system controller 220 may collect information about the first to fourth encryption algorithms from the network interface device 210 and the first to third computing storage devices 230_1 to 230_3 to generate offloading information.

In an example embodiment, the system controller 220 may receive an encryption offloading request of the host through the network interface device 210 from the computing system 20 and may search for a device which supports an encryption algorithm suitable for the encryption offloading request.

In an example embodiment, the system controller 220 may perform a management operation so that an encryption operation based on the encryption offloading request of the host is not performed in the network interface device 210 and the first to third computing storage devices 230_1 to 230_3, based on a search result.

In an example embodiment, based on the flag received from the system controller 220, the first to third computing storage devices 230_1 to 230_3 may perform an encryption operation on data received from the PCIe switch circuit 240 to store encrypted data in the non-volatile memory devices 232_1 to 232_3 or intactly store data, received from the PCIe switch circuit 240, in the non-volatile memory devices 232_1 to 232_3.

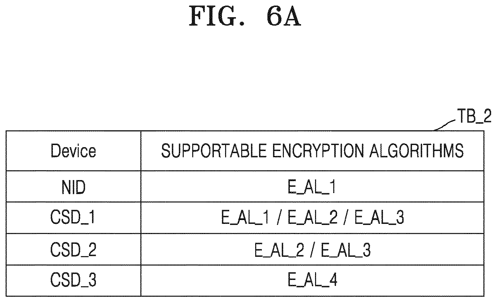

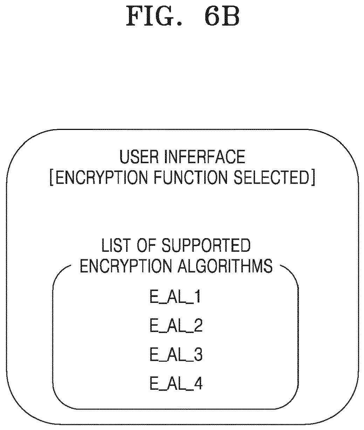

FIG. 6A is a table diagram for describing encryption algorithms supported by devices included in a storage system, according to an example embodiment, and FIG. 6B is a diagram for describing a list provided through a user interface, according to an example embodiment. An encryption algorithm described with reference to FIGS. 6A and 6B may correspond to an algorithm corresponding to an encryption offloading function.

Referring to a second table TB_2 of FIG. 6A, a network interface device NID may support a first encryption algorithm E_AL_1, a first computing storage device CSD_1 may support first to third encryption algorithms E_AL_1, E_AL_2, and E_AL_3, a second computing storage device CSD_2 may support the second and third encryption algorithms E_AL_2 and E_AL_3, and a third computing storage device CSD_3 may support the third encryption algorithm E_AL_4. That is, the first encryption algorithm E_AL_1 may be duplicated in an encryption algorithm supported by the network interface device NID and encryption algorithms supported by the first computing storage device CSD_1, and the second and third encryption algorithms E_AL_2 and E_AL_3 may be duplicated in encryption algorithms supported by the first computing storage device CSD_1 and the second computing storage device CSD_2.

In an example embodiment, a system controller may perform a management operation so that an encryption offloading operation based on one of the first to fourth encryption algorithms E_AL_1 to E_AL_4 is not repeatedly performed. Also, the system controller may perform a management operation to search for at least one of the devices NID and CSD_1 to CSD_3 supporting an algorithm suitable for the encryption offloading request of the host and allow a found device to smoothly perform an encryption offloading operation.

Referring further to FIG. 6B, the system controller may collect information about the first to fourth encryption algorithms E_AL_1 to E_AL_4 supported by the devices NID and CSD_1 to CSD_3 to generate offloading information and may provide a list based on the offloading information to the host through a user interface.

The host may select one encryption algorithm from among the first to fourth encryption algorithms E_AL_1 to E_AL_4 and may transmit an encryption offloading request based on the selected encryption algorithm to a storage system including the system controller.

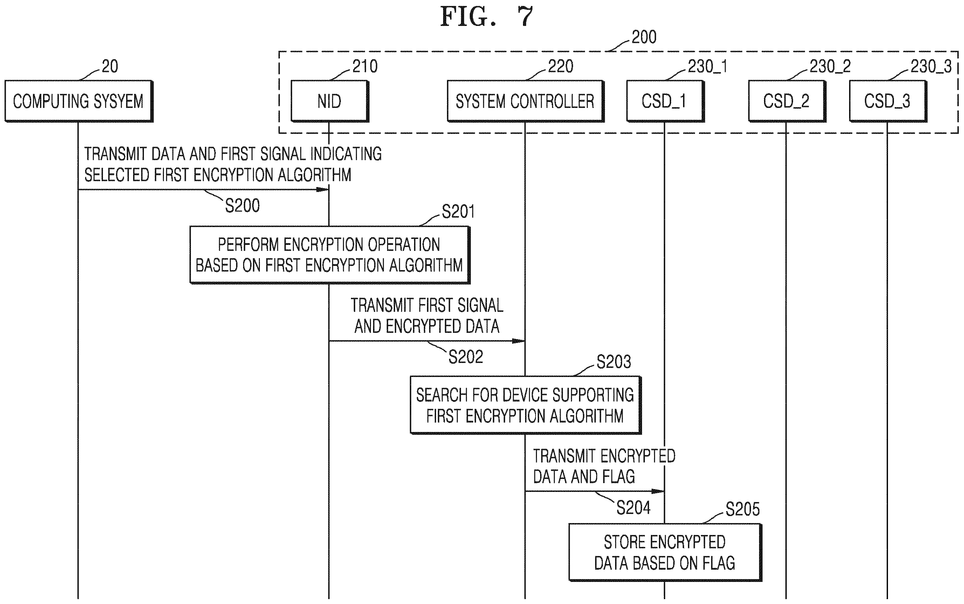

FIGS. 7 to 10 are flowcharts for describing operating methods of a storage system 200, according to example embodiments. FIGS. 7 to 10 are described below with reference to FIG. 6A. The storage system 200 may include a network interface device 210, a system controller 220, and first to third computing storage devices 230_1 to 230_3.

Referring to FIG. 7, in operation S200, a computing system 20 may transmit data and a first signal, indicating a first encryption algorithm selected by a host, to the network interface device 210.

In operation S201, the network interface device 210 may perform an encryption operation on the transmitted data, based on a first encryption algorithm E _AL_1. In an example embodiment, the network interface device 210 may determine whether an encryption algorithm indicated by the first signal matches the first encryption algorithm E_AL_1 supported by the network interface device 210, and when it is determined that the encryption algorithm matches the first encryption algorithm E_AL_1, the network interface device 210 may perform an encryption operation on the transmitted data, based on the first encryption algorithm E _AL_1.

In operation S202, the network interface device 210 may transmit the first signal and encrypted data to the system controller 220. In some example embodiments, the network interface device 210 may additionally transmit a separate signal, indicating that the transmitted data is encrypted, to the system controller 220.

In operation S203, the system controller 220 may search for a device supporting the first encryption algorithm E _AL_1, based on the first signal. In an example embodiment, the system controller 220 may identify the network interface device 210 and the first computing storage device 230_1 each supporting the first encryption algorithm E _AL_1, based on offloading information. The system controller 220 may recognize that an encryption operation based on the first encryption algorithm E_AL_1 has been performed in the network interface device 210, based on a search result, and may recognize that the data received from the network interface device 210 is encrypted data. In some example embodiments, the system controller 220 may recognize that an encryption operation has been performed in the network interface device 210, based on a separate signal received from the network interface device 210.

In operation S204, the system controller 220 may transmit the encrypted data and a flag to the first computing storage device 230_1. The flag may indicate that the data received from the system controller 220 has been encrypted based on the first encryption algorithm E_AL_1. In some example embodiments, the system controller 220 may transmit the encrypted data and the flag to the other computing storage devices (the second and third computing storage devices 230_2 and 230_3).

In operation S205, the first computing storage device 230_1 may not perform a separate encryption operation on the encrypted data and may intactly store the encrypted data, based on the flag. In an example embodiment, the first computing storage device 230_1 may store the encrypted data in non-volatile memory devices included in the first computing storage device 230_1. Also, when a read command corresponding to the encrypted data is received by the first computing storage device 230_1, the first computing storage device 230_1 may intactly transmit the encrypted data to the system controller 220. The encrypted data may be decrypted by the network interface device 210.

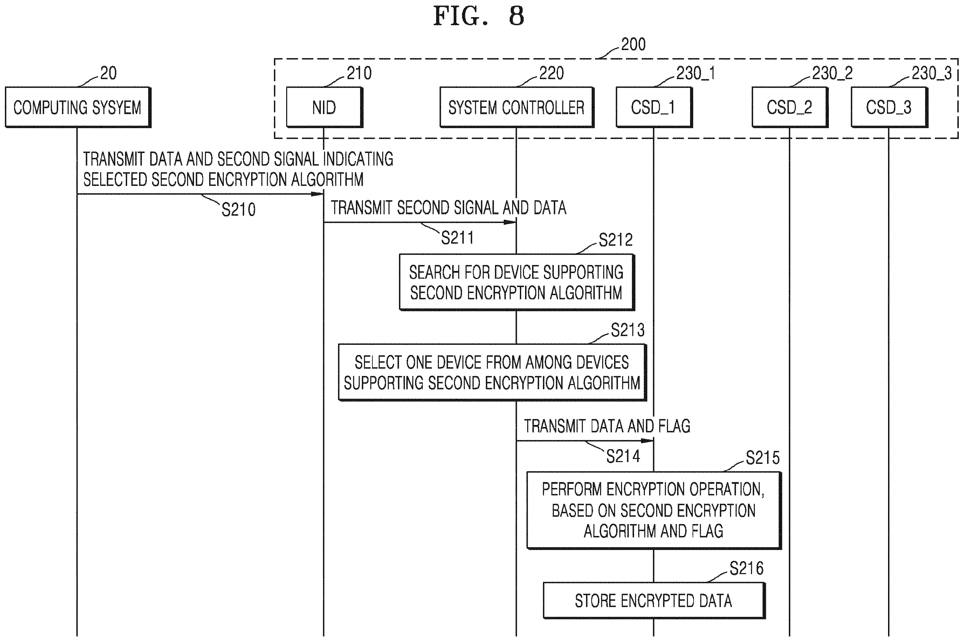

Referring further to FIG. 8, in operation S210, the computing system 20 may transmit data and a second signal, indicating a second encryption algorithm selected by the host, to the network interface device 210.

In operation S211, the network interface device 210 may transmit the second signal and the data to the system controller 220. In an example embodiment, the network interface device 210 may determine whether an encryption algorithm indicated by the second signal matches the first encryption algorithm E_AL_1 supported by the network interface device 210, and when it is determined that the encryption algorithm does not match the first encryption algorithm E _AL_1, the network interface device 210 may transfer the transmitted data to the system controller 220.

In operation S212, the system controller 220 may search for a device supporting the second encryption algorithm E_AL_2, based on the second signal. In an example embodiment, the system controller 220 may identify the first and second computing storage devices 230_1 and 230_2 supporting the second encryption algorithm E_AL_2, based on offloading information.

In operation S213, the system controller 220 may select one device from among the devices supporting the second encryption algorithm E_AL_2. In an example embodiment, the system controller 220 may select the first computing storage device 230_1 from among the found first and second computing storage devices 230_1 and 230_2.

In operation S213, the system controller 220 may transmit data and a flag to the first computing storage device 230_1. The flag may indicate that the data received from the system controller 220 is not encrypted. In some example embodiments, when the first computing storage device 230_1 supports a plurality of encryption algorithms, the flag may additionally indicate the second encryption algorithm E_AL_2.

In operation S215, the first computing storage device 230_1 may perform an encryption operation, based on the second encryption algorithm E_AL_2 and the flag. In an example embodiment, the first computing storage device 230_1 may recognize that an encryption operation using the second encryption algorithm E_AL_2 corresponding to the received data with reference to the flag is needed, and the first computing storage device 230_1 may encrypt the received data by using the second encryption algorithm E_AL_2.

In operation S216, the first computing storage device 230_1 may store encrypted data. In an example embodiment, the first computing storage device 230_1 may store the encrypted data in non-volatile memory devices included in the first computing storage device 230_1. Also, when a read command corresponding to the encrypted data is received by the first computing storage device 230_1, the first computing storage device 230_1 may decrypt the encrypted data and may transmit decrypted data to the system controller 220.

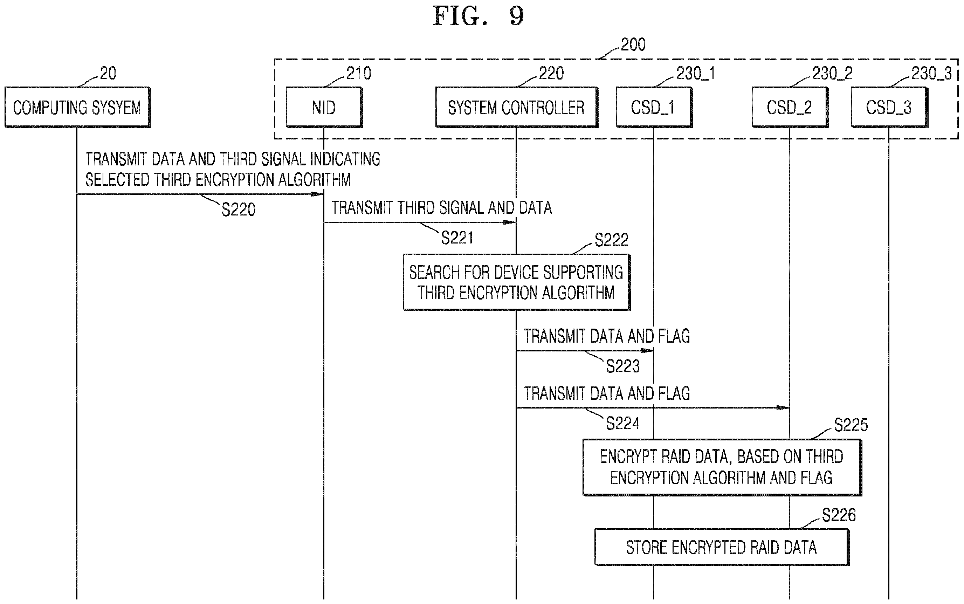

Referring further to FIG. 9, in operation S220, the computing system 20 may transmit data and a third signal, indicating a third encryption algorithm selected by the host, to the network interface device 210.

In operation S221, the network interface device 210 may transmit the third signal and the data to the system controller 220. In an example embodiment, the network interface device 210 may determine whether an encryption algorithm indicated by the third signal matches the first encryption algorithm E_AL_1 supported by the network interface device 210, and when it is determined that the encryption algorithm does not match the first encryption algorithm E _AL_1, the network interface device 210 may transfer the transmitted data to the system controller 220.

In operation S222, the system controller 220 may search for a device supporting the third encryption algorithm E_AL_3, based on the third signal. In an example embodiment, the system controller 220 may identify the first and second computing storage devices 230_1 and 230_2 supporting the third encryption algorithm E _AL_3, based on offloading information. Furthermore, an example embodiment is described where each of the first and second computing storage devices 230_1 and 230_2 is implemented as correlated redundant array of independent disks (RAID), and the third encryption algorithm E_AL_3 is suitable for a data storage method of RAID.

In operation S223, the system controller 220 may transmit data and a flag to the first computing storage device 230_1. In operation S224, the system controller 220 may transmit data and a flag to the second computing storage device 230_2. The flag may indicate that the data received from the system controller 220 is not encrypted. In an example embodiment, when the first and second computing storage devices 230_1 and 2302 support a plurality of encryption algorithms, the flag may additionally indicate the third encryption algorithm E_AL_3.

In operation S225, the first and second computing storage devices 230_1 and 230_2 may encrypt RAID data which is received data, the third encryption algorithm and the flag.

In operation S226, the first and second computing storage devices 230_1 and 230_2 may store encrypted RAID data.

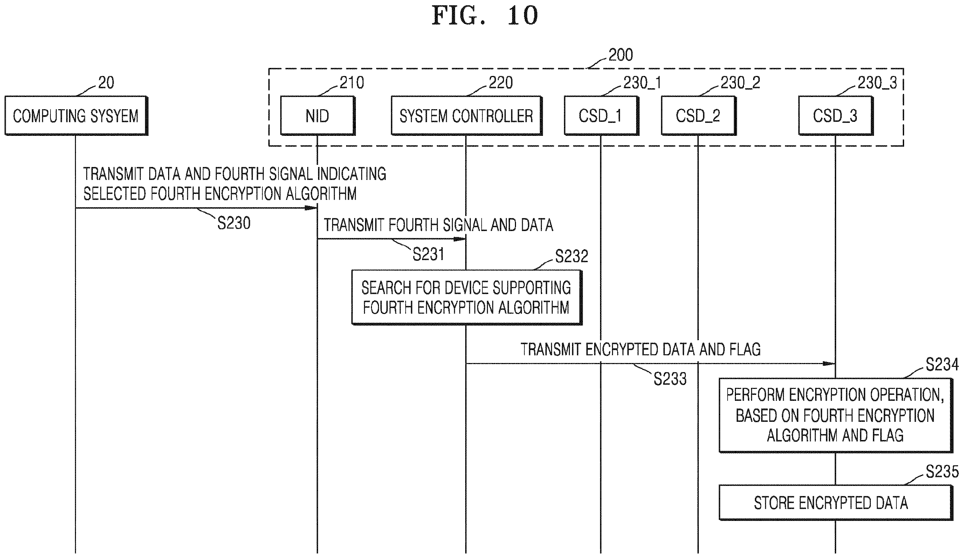

Referring further to FIG. 10, in operation S230, the computing system 20 may transmit data and a fourth signal, indicating a fourth encryption algorithm selected by the host, to the network interface device 210.

In operation S231, the network interface device 210 may transmit the fourth signal and the data to the system controller 220. In an example embodiment, the network interface device 210 may determine whether an encryption algorithm indicated by the fourth signal matches the first encryption algorithm E_AL_1 supported by the network interface device 210, and when it is determined that the encryption algorithm does not match the first encryption algorithm E _AL_1, the network interface device 210 may transfer the transmitted data to the system controller 220.

In operation S232, the system controller 220 may search for a device supporting the fourth encryption algorithm E_AL_4, based on the fourth signal. In an example embodiment, the system controller 220 may identify the third computing storage device 230_3 supporting the fourth encryption algorithm E_AL_4, based on offloading information.

In operation S233, the system controller 220 may transmit data and a flag to the third computing storage device 230_3. The flag may indicate that the data received from the system controller 220 is not encrypted.

In operation S234, the third computing storage device 230_3 may perform an encryption operation, based on the fourth encryption algorithm E_AL_4 and the flag. In an example embodiment, the third computing storage device 230_3 may recognize that an encryption operation using the fourth encryption algorithm E_AL_4 corresponding to the received data with reference to the flag is needed, and the third computing storage device 230_3 may encrypt the received data by using the fourth encryption algorithm E_AL_4.

In operation S235, the third computing storage device 230_3 may store encrypted data. In an example embodiment, the third computing storage device 230_3 may store the encrypted data in non-volatile memory devices included in the third computing storage device 230_3. Also, when a read command corresponding to the encrypted data is received by the third computing storage device 230_3, the third computing storage device 230_3 may decrypt the encrypted data and may transmit decrypted data to the system controller 220.

FIG. 11 is a diagram for describing a domain supporting an offloading function, according to an example embodiment. A storage system may include a network interface device 210 and first to third computing storage devices 230_1 to 230_3.

Referring to FIG. 11, a domain A supporting an encryption offloading function may include a network interface device 210 and first to third computing storage devices 230_1 to 230_3. Also, a domain B supporting a machine learning offloading function may include first to third computing storage devices 230_1 to 230_3.

Offloading functions respectively supported by some of devices included in the storage system may differ. That is, as in FIG. 11, the network interface device 210 may not support a machine learning offloading function.

In the following example embodiments, it may be assumed that, when a machine learning offloading function of the storage system is selected by a host and activated, an encryption algorithm suitable for the machine learning offloading function is used in an encryption operation of the storage system so that the machine learning offloading function of the storage system is efficiently performed.

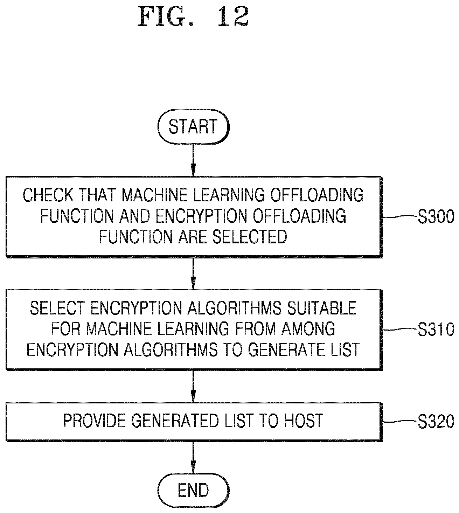

FIG. 12 is a flowchart for describing an operating method of a storage system, according to an example embodiment.

Referring to FIG. 12, in operation S300, the storage system may check that a machine learning offloading function and an encryption offloading function are selected by a host.

In operation S310, the storage system may select encryption algorithms suitable for machine learning from among a plurality of encryption algorithms to generate a list. In an example embodiment, the storage system may sort encryption algorithms suitable for machine learning from among encryption algorithms supported by devices included in the storage system to generate a list, based on offloading information.

In operation S320, the storage system may provide the host with the list which is generated in operation S310.

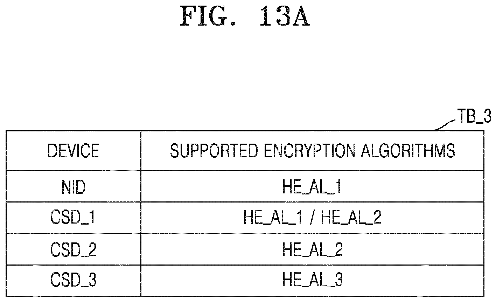

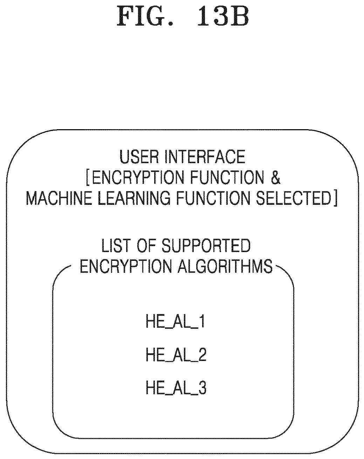

In some example embodiments, when a machine learning offloading function is selected by the host, the storage system may allow the host to determine whether or not to apply an encryption offloading function, through a user interface. When the machine learning offloading function is selected by the host and an encryption offloading function is not selected, the storage system may generate a list of a plurality of machine learning algorithms and may provide the generated list to the host, and thus, the host may select one machine learning algorithm from among the plurality of machine learning algorithms. FIG. 13A is a table diagram for describing encryption algorithms supported by devices included in a storage system, according to an example embodiment, and FIG. 13B is a diagram for describing a list provided through a user interface, according to an example embodiment. An encryption algorithm described with reference to FIGS. 13A and 13B may correspond to an algorithm which corresponds to an encryption offloading function and is suitable for machine learning. FIGS. 13A and 13B may be an example where algorithms suitable for machine learning are sorted from among encryption algorithms supported by devices included in the storage system. For example, an encryption algorithm suitable for machine learning may be a homomorphic encryption algorithm. A machine learning operation may be performed on data encrypted based on the homomorphic encryption algorithm without decryption.

Referring to a third table TB_3 of FIG. 13A, a network interface device NID may support a fifth encryption algorithm HE_AL_1, a first computing storage device CSD_1 may support the fifth encryption algorithm HE_AL_1 and a sixth encryption algorithm HE_AL_2, a second computing storage device CSD_2 may support the sixth encryption algorithm HE_AL_2, and a third computing storage device CSD_3 may support a seventh encryption algorithm HE_AL_3. That is, the fifth encryption algorithm HE_AL_1 may be duplicated in an encryption algorithm supported by a network interface device NID and encryption algorithms supported by the first computing storage device CSD_1, and the sixth encryption algorithm HE_AL_2 may be duplicated in encryption algorithms supported by the first computing storage device CSD_1 and the second computing storage device CSD_2.

In an example embodiment, a system controller may perform a management operation so that an encryption offloading operation based on one of the fifth to seventh encryption algorithms HE_AL_1 to HE_AL_3 is not performed. Also, the system controller may perform a management operation to search for at least one of the devices NID and CSD_1 to CSD_3 supporting an algorithm suitable for the encryption offloading request of the host and allow a found device to smoothly perform an encryption offloading operation.

Referring further to FIG. 13B, the system controller may sort the fifth to seventh encryption algorithms HE_AL_1 to HE_AL_3 from offloading information about encryption algorithms supported by the devices NID and CSD_1 to CSD_3 to generate a list and may provide the generated list to the host through a user interface.

The host may select one encryption algorithm from among the fifth to seventh encryption algorithms HE_AL_1 to HE_AL_3 and may transmit an encryption offloading request based on the selected encryption algorithm to a storage system including the system controller.

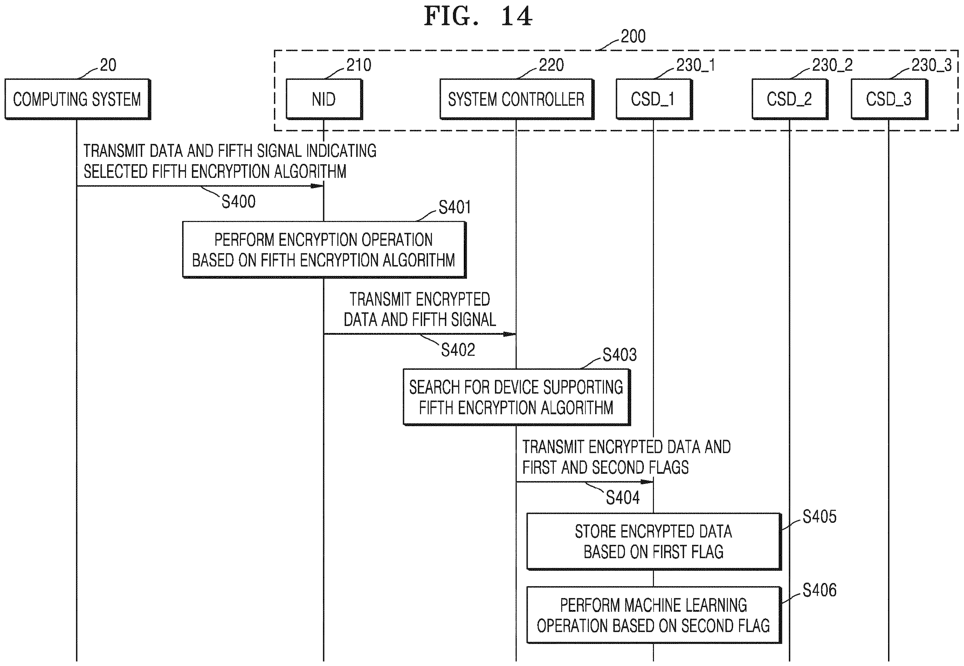

FIGS. 14 to 16 are flowcharts for describing an operating method of a storage system 200, according to an example embodiment. FIGS. 14 to 16 are described below with reference to the example embodiment of FIG. 13A. The storage system 200 may include a network interface device 210, a system controller 220, and first to third computing storage devices 230 1 to 230_3.

Referring further to FIG. 14, in operation S400, a computing system 20 may transmit data and a fifth signal, indicating the fifth encryption algorithm HE_AL_1 selected by the host, to the network interface device 210.

In operation S401, the network interface device 210 may perform an encryption operation on the transmitted data, based on the fifth encryption algorithm HE_AL_1. In an example embodiment, the network interface device 210 may determine whether an encryption algorithm indicated by the fifth signal matches the fifth encryption algorithm HE_AL_1 supported by the network interface device 210, and when it is determined that the encryption algorithm matches the fifth encryption algorithm HE_AL_1, the network interface device 210 may perform an encryption operation on the transmitted data, based on the fifth encryption algorithm HE_AL_1.

In operation S402, the network interface device 210 may transmit the fifth signal and encrypted data to the system controller 220. In some example embodiments, the network interface device 210 may additionally transmit a separate signal, indicating that the transmitted data is encrypted, to the system controller 220.

In operation S403, the system controller 220 may search for a device supporting the fifth encryption algorithm HE _AL_1, based on the fifth signal. In an example embodiment, the system controller 220 may identify the network interface device 210 and the first computing storage device 230_1 each supporting the fifth encryption algorithm HE_AL_1, based on offloading information. The system controller 220 may recognize that an encryption operation based on the fifth encryption algorithm HE_AL_1 has been performed in the network interface device 210, based on a search result, and may recognize that the data received from the network interface device 210 is encrypted data. In some example embodiments, the system controller 220 may recognize that an encryption operation has been performed in the network interface device 210, based on a separate signal received from the network interface device 210.

In operation S404, the system controller 220 may transmit the encrypted data and first and second flags to the first computing storage device 230_1. The first flag may indicate that the data received from the system controller 220 has been encrypted based on the fifth encryption algorithm HE_AL_1. The second flag may indicate that description on the encrypted data is not needed in performing a machine learning operation.

In operation S405, the first computing storage device 230_1 may not perform a separate encryption operation on the encrypted data and may intactly store the encrypted databased on the first flag.

In operation S406, the first computing storage device 230_1 may perform machine learning based on the second flag. In an example embodiment, the first computing storage device 230_1 may perform a machine learning operation on the encrypted data without decryption to generate result data, based on the second flag. The first computing storage device 230_1 may store the result data. Also, when a read command corresponding to the result data is received by the first computing storage device 230_1, the first computing storage device 230_1 may intactly transmit the result data to the system controller 220. The result data may be decrypted by the network interface device 210. Furthermore, operation S406 may be performed in response to a machine learning request from the host.

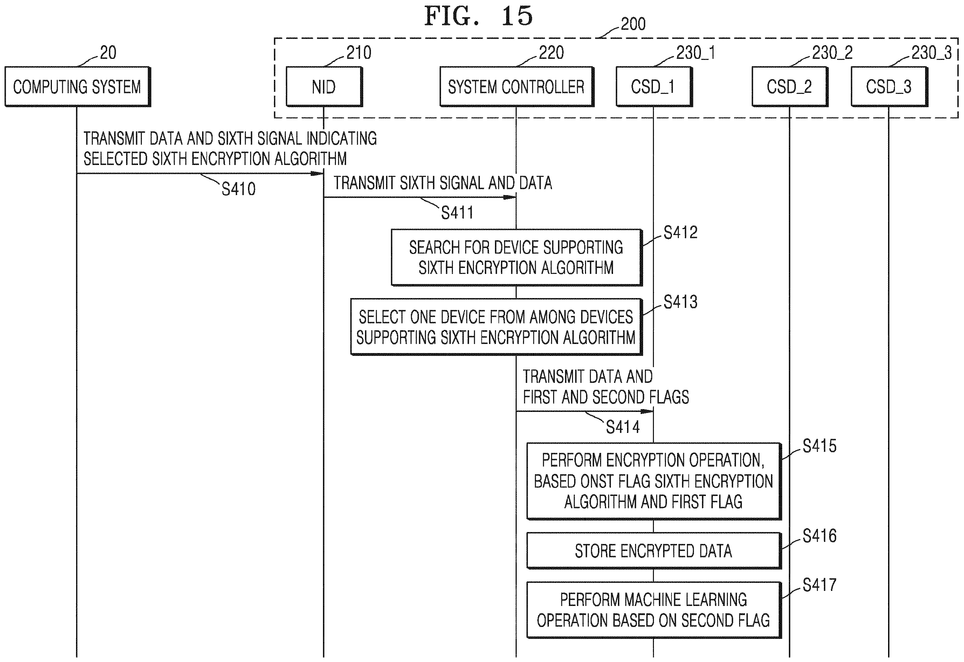

Referring further to FIG. 15, in operation S410, the computing system 20 may transmit data and a sixth signal, indicating the sixth encryption algorithm HE_AL_2 selected by the host, to the network interface device 210.

In operation S411, the network interface device 210 may transmit the sixth signal and the data to the system controller 220. In an example embodiment, the network interface device 210 may determine whether an encryption algorithm indicated by the sixth signal matches the fifth encryption algorithm HE_AL_1 supported by the network interface device 210, and when it is determined that the encryption algorithm does not match the fifth encryption algorithm HE_AL_1, the network interface device 210 may transfer the transmitted data to the system controller 220.

In operation S412, the system controller 220 may search for a device supporting the sixth encryption algorithm HE_AL_2, based on the sixth signal. In an example embodiment, the system controller 220 may identify the first and second computing storage devices 230_1 and 230_2 supporting the sixth encryption algorithm HE_AL_2, based on offloading information.

In operation S413, the system controller 220 may select one device from among the devices supporting the sixth encryption algorithm HE_AL_2. In an example embodiment, the system controller 220 may select the first computing storage device 230_1 from among the found first and second computing storage devices 230_1 and 230_2.

In operation S414, the system controller 220 may transmit data and first and second flags to the first computing storage device 230_1. The first flag may indicate that the data received from the system controller 220 is not encrypted. In some example embodiments, when the first computing storage device 230_1 supports a plurality of encryption algorithms, the first flag may additionally indicate the sixth encryption algorithm HE_AL_2. The second flag may indicate that decryption on the encrypted data is not needed in performing a machine learning operation.

In operation S415, the first computing storage device 230_1 may perform an encryption operation, based on the sixth encryption algorithm HE_AL_2 and the first flag. In an example embodiment, the first computing storage device 230_1 may recognize that an encryption operation using the sixth encryption algorithm HE_AL_2 corresponding to the received data with reference to the first flag is needed, and the first computing storage device 230_1 may encrypt the received data by using the sixth encryption algorithm HE_AL_2.

In operation S416, the first computing storage device 230_1 may store encrypted data. In an example embodiment, the first computing storage device 230_1 may store the encrypted data in non-volatile memory devices included in the first computing storage device 230_1.

In operation S417, the first computing storage device 230_1 may perform a machine learning operation on the stored encrypted data, based on the second flag. In an example embodiment, the first computing storage device 230_1 may perform a machine learning operation on the encrypted data without decryption to generate result data, with reference to the second flag. The first computing storage device 230_1 may store the result data. When a read command corresponding to the result data is received by the first computing storage device 230_1, the first computing storage device 230_1 may decrypt the result data and may transmit decrypted result data to the system controller 220.

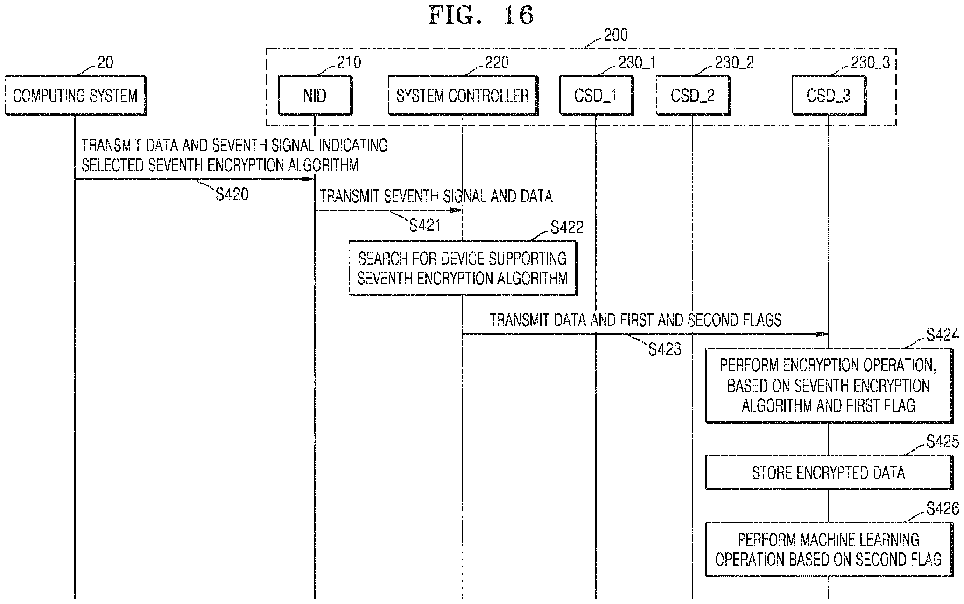

Referring further to FIG. 16, in operation S420, the computing system 20 may transmit data and a seventh signal, indicating the seventh encryption algorithm HE_AL_3 selected by the host, to the network interface device 210.

In operation S421, the network interface device 210 may transmit the seventh signal and the data to the system controller 220. In an example embodiment, the network interface device 210 may determine whether an encryption algorithm indicated by the seventh signal matches the seventh encryption algorithm HE_AL_3 supported by the network interface device 210, and when it is determined that the encryption algorithm does not match the seventh encryption algorithm HE_AL_3, the network interface device 210 may transfer the transmitted data to the system controller 220.

In operation S422, the system controller 220 may search for a device supporting the seventh encryption algorithm HE_AL_3, based on the seventh signal. In an example embodiment, the system controller 220 may identify the third computing storage device 230_3 supporting the seventh encryption algorithm E_AL_3, based on offloading information.

In operation S423, the system controller 220 may transmit data and first and second flags to the first computing storage device 230_1. The first flag may indicate that the data received from the system controller 220 is not encrypted. The second flag may indicate that decryption on the encrypted data is not needed in performing a machine learning operation.

In operation S424, the third computing storage device 230_3 may perform an encryption operation, based on the seventh encryption algorithm HE_AL_3 and the first flag. In an example embodiment, the third computing storage device 230_3 may recognize that an encryption operation using the seventh encryption algorithm HE_AL_3 corresponding to the received data with reference to the first flag is needed, and the third computing storage device 230_3 may encrypt the received data by using the seventh encryption algorithm HE_AL_3.

In operation S425, the third computing storage device 230_3 may store encrypted data. In an example embodiment, the third computing storage device 230_3 may store the encrypted data in non-volatile memory devices included in the third computing storage device 230_3.

In operation S426, the third computing storage device 230_3 may perform a machine learning operation on the stored encrypted data, based on the second flag. In an example embodiment, the third computing storage device 230_3 may perform a machine learning operation on the encrypted data without decryption to generate result data, with reference to the second flag. The third computing storage device 230_3 may store the result data.

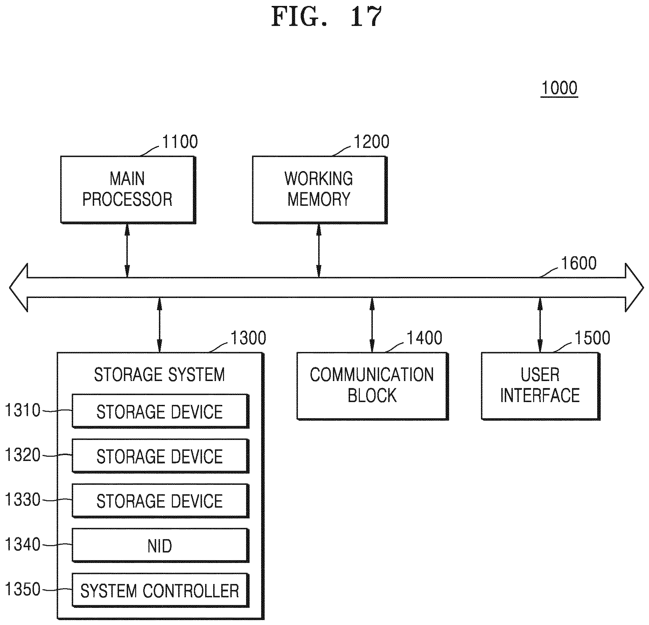

FIG. 17 is a block diagram illustrating an electronic system 1000 according to an example embodiment.

Referring to FIG. 17, the electronic system 1000 may include a main processor 1100, a working memory 1200, a storage system 1300, a communication block 1400, a user interface 1500, and a bus 1600. For example, the electronic system 1000 may be one of electronic devices, such as a desktop computer, a laptop computer, a table computer, a smartphone, a wearable device, a video game console, a workstation, one or more servers, electrical vehicles, a home appliance, and a medical device.

The main processor 1100 may control all operations of the electronic system 1000. For example, the main processor 1100 may be implemented as a general-use processor, a dedicated processor, or an application processor, which includes one or more processor cores.

The working memory 1200 may store data used in an operation of the electronic system 1000. For example, the working memory 1200 may temporarily store data, obtained through processing by the main processor 1100, or data which is to be processed thereby. For example, the working memory 1200 may include a volatile memory, such as SRAM, DRAM, or SDRAM, and/or a non-volatile memory such as PRAM, MRAM, ReRAM, or FRAM.

The storage system 1300 may include a plurality of devices. For example, the storage system 1300 may include storage devices 1310, 1320, and 1330, a network interface device 1340, and a system controller 1350. FIG. 17 illustrates three storage devices 1310, 1320, and 1330, but the number of storage devices included in the storage system 1300 may be variously modified or corrected to be suitable for the requirements of the electronic system 1000.

Each of the storage devices 1310, 1320, and 1330 may store data regardless of the supply of power. For example, each of the storage devices 1310, 1320, and 1330 may include a non-volatile memory such as flash memory, PRAM, MRAM, ReRAM, or FRAM. For example, each of the storage devices 1310, 1320, and 1330 may include a storage medium such as an SSD, a card storage, or an embedded storage.

The storage devices 1310, 1320, and 1330 and the network interface device 1340 may each include a computing circuit which performs an offloading computing operation and may distribute a load of the main processor 1100.

As described above with reference to FIGS. 1 to 16, the system controller 1350 may perform a management operation so that an offloading operation requested by the main processor 1100 is not repeated, based on offloading information about offloading functions, supported by the storage devices 1310, 1320, and 1330 and the network interface device 1340, and algorithms corresponding thereto.

The communication block 1400 may support at least one of various wired/wireless communication protocols so as to communicate with an external device/system outside the electronic system 1000. The user interface 1500 may include various input/output (I/O) interfaces for relaying communication between a user and the electronic system 1000.

The bus 1600 may provide a communication path between the elements of the electronic system 1000. The elements of the electronic system 1000 may exchange data therebetween, based on a bus format of the bus 1600. For example, the bus format may include one or more of various interface protocols such as universal serial bus (USB), small computer system interface (SCSI), peripheral component interconnect express (PCIe), serial advanced technology attachment (SATA), serial attached SCSI (SAS), non-volatile memory express (NVMe), universal flash storage (UFS), double data rate (DDR), and low power DDR (LPDDR).

The main processor 1100 may operate as a host. The main processor 1100 may communicate with each of the storage devices 1310, 1320, and 1330 to provide a service to a user. For example, the main processor 1100 may store data in the storage devices 1310, 1320, and 1330 and may read data stored in the storage devices 1310, 1320, and 1330.

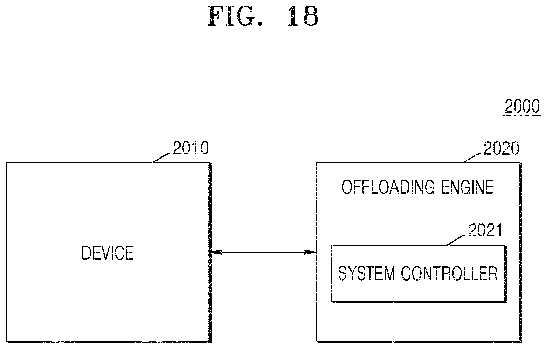

FIG. 18 is a block diagram illustrating a database system 2000 according to an example embodiment.

Referring to FIG. 18, the database system 2000 may include a device 2010 and an offloading engine 2020. In some example embodiments, the offloading engine 2020 may be a portion of the device 2010, may be connected with the device 2010. The device 2010 may be a computer or a server, which includes a CPU, a main memory, and a permanent storage device (for example, an SSD). The offloading engine 2020 may include a permanent memory, or may be connected with the permanent memory. The permanent memory may be a type of memory which maintains the equilibrium of a speed, a capacity, and continuity. The offloading engine 2020 may include a processing circuit and a memory. The offloading engine 2020 may be connected with the device 2010 through one of several interfaces including PCIe and NVDIMM-p (through a memory channel).

The device 2010 may perform various database processing operations including an executed query.

The offloading engine 2020 may perform offloading operations (for example, database processing operations) instead of the device 2010, and thus, may reduce a load of the device 2010. The offloading engine 2020 may include the system controller 2021.

As described above with reference to FIGS. 1 to 16, the system controller 2021 may perform a management operation so that an offloading operation requested by the device 2010 is not repeated, based on offloading information about offloading functions, supported by the elements of the offloading engine 2020, and algorithms corresponding thereto.

In some example embodiments, the offloading engine 2020 may be designed in special hardware to require energy which is less than that of the general-use of a CPU of the device 2010 in performing processing operations, instead of the device 2010.

In some example embodiments, each of the components represented by a block as illustrated in FIGS. 1, 2, 5, 7-10 and 14-18 may be implemented as various numbers of hardware, software and/or firmware structures that execute respective functions described above, according to embodiments. For example, at least one of these components may include various hardware components including a digital circuit, a programmable or nonprogrammable logic device or array, an application specific integrated circuit (ASIC), transistors, capacitors, logic gates, or other circuitry using use a direct circuit structure, such as a memory, a processor, a logic circuit, a look-up table, etc., that may execute the respective functions through controls of one or more microprocessors or other control apparatuses. Also, at least one of these components may include a module, a program, or a part of code, which contains one or more executable instructions for performing specified logic functions, and executed by one or more microprocessors or other control apparatuses. Also, at least one of these components may further include or may be implemented by a processor such as a central processing unit (CPU) that performs the respective functions, a microprocessor, or the like. Functional aspects of embodiments may be implemented in algorithms that execute on one or more processors. Furthermore, the components, elements, modules or units represented by a block or processing steps may employ any number of related art techniques for electronics configuration, signal processing and/or control, data processing and the like.

While aspects of example embodiments have been particularly shown and described, it will be understood that various changes in form and details may be made therein without departing from the spirit and scope of the following claims.

## Claims

1. A storage system comprising:
a network interface device configured to communicate with a host and comprising a first computing circuit configured to support first offloading functions and first algorithms corresponding thereto;
a computing storage device configured to store data and comprising a second computing circuit configured to support second offloading functions and second algorithms corresponding thereto; and
a system controller configured to perform a management operation to control an offloading computing operation to be performed by one of the first computing circuit and the second computing circuit according to an offloading request of the host, based on offload capability information about the first offloading functions, the second offloading functions, the first algorithms, and the second algorithms.

2. The storage system of claim 1, wherein the system controller is further configured to transmit a list, indicating offloading functions and algorithms supported by the storage system, to the host through the network interface device.

3. The storage system of claim 1, wherein the system controller is further configured to search for a device capable of performing the offloading computing operation based on the offloading request among the network interface device and the computing storage device, based on the offload capability information, and perform the management operation based on a search result.

4. The storage system of claim 1, wherein the first and second offloading functions comprise any one or any combination of a scan & filter offloading function, a compression/decompression function, an encryption/decryption offloading function, a machine learning offloading function, and an encoding/decoding function.

5. The storage system of claim 1, wherein the offloading request indicates an offloading function and an algorithm each selected by the host.

6. The storage system of claim 1, wherein the system controller is further configured to collect information about functions and algorithms supported by each of the network interface device and the computing storage device in an initialization operation, and generate the offload capability information based on the collected information.

7. The storage system of claim 1, wherein the computing storage device comprises a solid state drive (SSD).

8. A storage system comprising:
a network interface device configured to communicate with a host and comprising a first computing circuit configured to support an encryption offloading function and first encryption algorithms corresponding thereto;
a first computing storage device configured to provide a first memory space to the host and comprising a second computing circuit configured to support the encryption offloading function and second encryption algorithms corresponding thereto;
a second computing storage device configured to provide a second memory space to the host and comprising a third computing circuit configured to support the encryption offloading function and third encryption algorithms corresponding thereto; and
a system controller configured to perform a management operation to control an encryption operation to be performed by any one or any combination of the first to third computing circuits according to an encryption offloading request of the host, based on offload capability information about the first to third encryption algorithms.

9. The storage system of claim 8, wherein the encryption offloading request comprises a signal indicating a fourth encryption algorithm selected by the host,
wherein each of the first and second encryption algorithms comprises the fourth encryption algorithm, and
wherein the system controller is further configured to perform the management operation to control the first computing circuit to perform the encryption operation prior to the second computing circuit.

10. The storage system of claim 9, wherein the system controller is further configured to transmit a flag to the first computing storage device indicating encrypted data obtained through encryption by the first computing circuit and that the encryption operation has been performed.

11. The storage system of claim 10, wherein the first computing storage device is further configured to store the encrypted data in the first memory space, based on the flag.

12. The storage system of claim 8, wherein the encryption offloading request comprises a signal indicating a fourth encryption algorithm selected by the host,
wherein each of the second and third encryption algorithms comprises the fourth encryption algorithm, and
wherein the system controller is further configured to perform the management operation to control the encryption operation to be performed by one of the first and second computing storage devices.

13. The storage system of claim 12, wherein the system controller is further configured to transmit a flag, indicating data received through the network interface device and that the encryption operation has not been performed, to a device selected from among the first and second computing storage devices.

14. The storage system of claim 13, wherein the flag indicates the fourth encryption algorithm.

15. The storage system of claim 13, wherein the selected device comprises the first computing storage device, and
wherein the first computing storage device is further configured to perform the encryption operation on the received data using the second computing circuit, based on the fourth encryption algorithm and the flag, and store encrypted data in the first memory space.
